(19) Europäisches Patentamt
European Patent Office
Office européen des brevets

(11) **EP 3 255 275 A1**

(12) **EUROPEAN PATENT APPLICATION**

(43) Date of publication:
**13.12.2017 Bulletin 2017/50**

(51) Int Cl.:
*F03D 80/30* *(2016.01)*

(21) Application number: **16173668.1**

(22) Date of filing: **09.06.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Siemens Aktiengesellschaft 80333 München (DE)**

(72) Inventor: **Nieuwenhuizen, John 8700 Horsens (DK)**

(54) **ROTOR BLADE DOWN-CONDUCTOR**

(57) The invention describes a rotor blade down-conductor (10) of a wind turbine lightning protection system (1), realized to extend from a blade root (20R) to a blade tip (20T), and wherein a portion ($10_{red}$) of the down-conductor (10), over at least a fraction ($L_{red}$) of the total down-conductor length (L), comprises a reduced self-inductance compared to the self-inductance of a functionally equivalent single-string down-conductor (5). The invention further describes a method of manufacturing a down-conductor (10) of a wind turbine lightning protection system (1); and a wind turbine (2) comprising at least one rotor blade (20) with such a down-conductor (10).

## FIG 1

EP 3 255 275 A1

**Description**

The invention describes a rotor blade down-conductor of a wind turbine lighting protection system, a method of manufacturing such a down-conductor, and a wind turbine.

A tall structure such as a wind turbine must be equipped with a lightning protection system (LPS) in order to receive a lightning strike and to divert the energy to ground in a controlled manner. The blades of a wind turbine are particularly vulnerable to lightning strikes on account of their length. The LPS of a wind turbine therefore generally includes a down-conductor for each blade, arranged in the interior of the blade and extending along its length from the blade base or root to the blade tip. One or more receptors, arranged at favourable positions on the blade exterior, are electrically connected to the down-conductor. In the event of a lightning strike to the blade, the strike will most likely be received at a receptor and safely passed to ground via the down-conductor that is arranged in the blade interior and which is electrically connected to further down-conductors travelling through the hub, nacelle and wind turbine tower into ground.

As wind turbines - particularly direct-drive wind turbines - are being developed to increase their power output, the length of the rotor blades increases correspondingly. This in turn requires very long down-conductors for the blades. However, the increased length of the blade down-conductor is associated with certain disadvantages. A problem arises from the self-inductance of the down-conductor in conjunction with its length. A longer down-conductor results in a higher voltage potential between tip and root ends, and the self-inductance of the down-conductor initially acts against current flow through the down-conductor. In combination, these characteristics result in a higher voltage load over the electrically isolating blade material, usually a glass-fibre reinforced material. The voltage load can reach such high levels that reach or even exceed the breakdown voltage of the blade material. For previous wind turbine dimensions with blade lengths in the order of 30 m, the blade thickness at the outer tip ends was generally sufficient to bear the voltage load associated with the self-inductance of the blade down-conductor. However, with longer blade lengths and higher voltage loads at the outer blade regions, the material thickness may not be sufficient. A first lightning strike can weaken a small area in the blade tip region. Even a very minor tear or rupture in the blade surface can allow moisture or water to intrude. A subsequent lightning strike can result in severe or catastrophic damage owing to the water - even if it is only a very small quantity - being rapidly heated to the point of a steam explosion. Damage can be so severe that the wind turbine must halt production until the entire blade can be replaced.

One way of dealing with this issue might be to increase the material thickness in the blade region, in order to raise the breakdown voltage. However, this would be associated with poorer aerodynamic performance, thereby detracting from the power output of the generator. Furthermore, an increased material thickness is associated with higher loading and therefore also with a reduced product lifetime. Such a solution is therefore not desirable.

It is therefore an object of the invention to provide a wind turbine rotor blade down-conductor that overcomes the problems described above.

This object is achieved by the down-conductor of claim 1; by the method of claim 9 of manufacturing a down-conductor; and by the wind turbine of claim 12.

According to the invention, the rotor blade down-conductor of a wind turbine lightning protection system is realized to extend from a blade root to a blade tip. According to the invention, a portion of the down-conductor, over at least a fraction of the total down-conductor length, comprises a reduced self-inductance compared to the self-inductance of a functionally equivalent single-string down-conductor.

In the context of the invention, the expression "equivalent single-string down-conductor" is to be understood as a conventional down-conductor comprising a single cable (or "string") extending from the blade root to the blade tip. This single cable or string can be realised as a multi-core braided cable, for example. Suitable material may be copper, tinned copper or other good conductor.

During a lighting strike to a wind turbine blade, transport to ground of the almost instantaneous extremely high currents is effectively hindered by the self-inductance of the down-conductor. Since voltage and current have a linear relationship, a two-fold increase in voltage leads to a two-fold increase in current, but a four-fold increase in power/energy. This can result in serious physical damage to a blade. The current from a high-frequency lightning event travels essentially only over the surface of the down-conductor due to the skin-effect. The invention is based on the insight that the self-inductance of a down-conductor is decreased by increasing its surface area.

By reducing the self-inductance of the down-conductor over a specific fraction of the total conductor length, the ground potential is effectively "brought closer" to the blade tip. This has the effect of reducing the strength of the voltage potential that may be established across the insulating blade material, thereby reducing the voltage stress on the material. The likelihood of stress-related damage to the blade material is therefore significantly reduced. This has the favourable effect of extending the useful lifetime of the blade and reducing or even eliminating blade repair costs related to lightning damage.

According to the invention, the method of manufacturing a rotor blade down-conductor comprises the steps of determining a fraction of the total conductor length over which a self-inductance of the down-conductor is to be reduced;

choosing a physical property of a comparable or equivalent single-string conductor; and modifying that physical property over a portion of the down-conductor to reduce the self-inductance of the down-conductor over that conductor length fraction.

The beneficial effect of reducing or lowering the self-inductance of the blade down-conductor (compared to a functionally equivalent single-string conductor) over the desired fraction is to reduce the electrical stress on the insulating blade material in the time immediately preceding a lightning strike as well as during the return stroke and any subsequent strokes during a lightning strike event.

A lightning strike to a wind turbine blade occurs when the leader, i.e. the lowest part of the step-wise downward-progressing ionized channel, meets an outward-reaching streamer developing from the blade, for example from a receptor. The high frequency behaviour of lightning events means that the released energy will favour or "prefer" a low-impedance path. In a pre-strike phase, the low-inductance construction of the inventive down-conductor will help to concentrate the free charges at a receptor in the blade outer end or tip region. This results in a more concentrated charge at a tip receptor, therefore also encouraging the development of a streamer reaching outward from the tip receptor. A streamer from the blade tip region can extend further outward, thereby increasing the probability of meeting a downward lightning path prior to an actual return stroke. The inventive down-conductor generally makes the tip receptor "more attractive".

During the return stroke, when the upward-reaching ionised streamer meets the downward ionised channel, the instant of highest peak current is reached, and the large dI/dt causes a very high potential gradient.

In the subsequent stroke, for which the ionised channel of the lightning path already exists, the rise time of the lightning current will be shorter and the ensuing voltages will be higher accordingly.

As explained above, the result of the extremely large current differential in combination with the inherent self-inductance of a long blade down-conductor is a very high potential difference over the length of the conductor and correspondingly large voltage stress over the insulating blade material. By reducing the self-inductance at least over some of the blade down-conductor's length, the voltage stress applied to the blade material is significantly reduced, particularly in the vulnerable outer blade region or blade tip.

According to the invention, the wind turbine comprises a number of rotor blades, wherein the length of a blade is in the range of 60 m or more. To avoid stress-related damage to the blade material in the build-up to a lightning strike, the wind turbine further comprises a lightning protection system according to the invention.

The reduced self-inductance of the rotor blade down-conductor ensures that the blade, especially in the outer regions approaching the blade tip, is better protected from stress-related damage. This is in favourable contrast to a rotor blade comprising a conventional down-conductor, which may sustain preliminary damage of the type that will weaken the blade and make it more likely to sustain severe damage in a subsequent event, for example catastrophic damage following a steam explosion in the blade tip region.

Particularly advantageous embodiments and features of the invention are given by the dependent claims, as revealed in the following description. Features of different claim categories may be combined as appropriate to give further embodiments not described herein.

In the following, it may be assumed that a wind turbine comprises a plurality of blades, usually three, that are mounted to the hub and that rotate with the hub as a single assembly. The present invention relates specifically to an improved down-conductor for installing in a rotor blade, and it may be assumed that the wind turbine comprises the other usual components of a lightning protection system, with various down-conductors, ring connectors, brush interfaces etc. connected in such a way that the energy of a lightning strike is conveyed to ground in a controlled and direct manner.

A long rotor blade will generally be equipped with several receptors arranged at suitable intervals along its length. Each receptor is connected electrically to the blade down-conductor arranged in the blade interior. However, lightning strikes to wind turbine rotor blades are most often observed toward the tip of a vertically oriented blade, since this presents the highest point and is the most likely origin for a leader. The invention considers a way of making a long down-conductor in a rotor blade appear to be "electrically shorter", and is based on the following insights:

The current generated in a lightning strike is of a transient nature, and the peak voltage drop along the down-conductor can be expressed as

$$V = L\frac{dI}{dt} \tag{1}$$

where L (in H/m) is the self-inductance of the down-conductor, and dI/dt (in A/s) is the largest or maximum value of the rate of change of the lightning current.

A conventional blade down-conductor with a cross-sectional area of 50 mm has a self-inductance in the order of 1 μH/m. During a severe lighting strike, the largest or peak dI/dt can reach a value of up to 200 kA/μs. This results in a voltage difference of up to 200 kV/m along the down-conductor. Applying these values to a rotor blade with a down-conductor length of 75 m, the total voltage difference from blade tip to blade root can be up to 15 megavolts. Such extreme voltage stress cannot reliably be withstood by the thin layer of glass-fibre reinforced material in the blade tip region, which generally suffers damage as a result. Even if the initial damage is only of a minor nature, the weakened region can offer an easy target for a subsequent lightning strike, and the result can be severe or catastrophic damage. The inventive idea is to reduce the self-inductance of the down-conductor over at least some of its length, to achieve a lower voltage drop per meter over that portion of the down-conductor. This can be achieved in a number of ways. For example, instead of using a single-string down-conductor made of copper or tinned copper, a different conductive material could be used. One possible candidate material could be carbon fibre, which is a very good conductor for high frequency currents due its multi-strand construction, especially if the carbon conductor comprises a relatively large flat surface. The wider and flatter the construction is, the lower the inductance. Alternatively, the inventive down-conductor can be realised using a suitable combination of one or more multi-strand wire conductors and a carbon sheet or mesh portion.

In a particularly preferred embodiment of the invention, the geometry of the down-conductor is altered over that fraction of the total length with the aim of increasing its cross-sectional surface area (compared to a functionally equivalent single-string conductor). For example, in a preferred embodiment of the invention, the reduced self-inductance fraction of the blade down-conductor is realized as a multi-string conductor. Here, multiple strings (preferably at least two) are arranged in parallel along a fraction of the overall down-conductor length. At each end of the multi-string arrangement, the terminals are connected together and preferably interconnected at several points over the length of the down-conductor, e.g. at any side receptor connection points, and at other points distributed over the remainder of the down-conductor's length. For example, four strings can be arranged in parallel over a large fraction of the down-conductor length, commencing at the root terminal (where the four ends are electrically joined) and extending outward in the direction of the blade tip. At the outer end of the multi-string arrangement, the other four ends are electrically connected to each other. A number of receptors mounted at intervals on the blade exterior can be electrically connected to the multi-string arrangement in the blade interior.

Preferably, the conductor strings of the reduced self-inductance fraction are essentially electrically equivalent. For example, the strings can all be made of the same material. Furthermore, since the high-frequency energy from a lightning strike travels essentially only over the surface of the down-conductor due to the skin-effect, the inductance of the down-conductor is decreased by increasing its surface area. To achieve a favourable low inductance, a braided cable with an inherently flat shape is preferred. Alternatively, the material and surface area may be different for the various strings, as long the desired current-carrying capacity is achieved.

The reduced self-inductance fraction of the blade down-conductor is preferably realised over a relatively large portion of the overall down-conductor length. To this end, the reduced self-inductance fraction of the blade down-conductor preferably extends over at least 60% of the total conductor length, more preferably over at least 80% of the total conductor length, most preferably over at least 90% of the total conductor length.

An exemplary calculation is based on a blade with a down-conductor of 75 m in length, and a reduced self-inductance portion comprising 4 strings in a parallel arrangement extending over 90% of the conductor length, i.e. over 67.5 m. The remaining 10% (7.5 m) comprises a single-string conductor. The parallel arrangement of four strings has the effect of reducing the self-inductance over that 90% to one quarter of the self-inductance of an equivalent single-string conductor. This has the effect of reducing the apparent blade length, or bringing the ground potential closer to the blade tip. From the point of view of a lightning strike poised to strike the outermost blade tip, the blade appears to have a length of only 24.375 m, comprising the reduced self-inductance length (one quarter of 67.5 m = 16.875 m) plus the length of single-string conductor in the blade tip (7.5 m).

The reduced electrical stress to which the insulating blade material is exposed can be quantified in relation to the electrical stress seen by the blade material when a conventional down-conductor is used. For an exemplary 75 m down-conductor, the electrical stress arising from a conventional realisation may be regarded as 100%. The electrical stress arising in the insulating blade material of a rotor blade containing the inventive down-conductor may be quantified as the fraction 24.375/75 = 0.325. In other words, electrical stress in the tip region of a 75 m blade can be reduced to less than a third.

In a further example, the reduced self-inductance portion of the down-conductor extends over 80% of the total down-conductor length. In this case, the outer 15 m of the down-conductor is realised as a single-string conductor, and the inner 60 m are realised as four parallel strings arranged between the root terminal and the outer portion. The "apparent length" of the blade is then 30 m (60/4 + 15), and the electrical stress can be expressed as the fraction 30/75, which is two fifths of the electrical stress that would be experienced by the blade material if a conventional down-conductor had been used instead.

Regardless of the manner in which the reduced self-inductance portion of the down-conductor is realized, the self-inductance in that portion preferably comprises at most 1.0 µH per meter, more preferably at most 0.5 µH per meter, most preferably at most 0.25 µH per meter.

The blade tip is generally very flat in construction, in order to achieve the desired aerodynamic behaviour. Space inside the blade tip region is therefore limited. In a preferred embodiment of the invention, therefore, the blade down-conductor comprises a conductor portion with nominal self-inductance arranged in the blade tip region. This conductor portion is electrically connected to the reduced self-inductance fraction in any suitable manner. For example, the single-string conductor portion in the blade tip can be clamped to a terminal that electrically connects multiple strings of a multi-string reduced self-inductance fraction.

Other objects and features of the present invention will become apparent from the following detailed descriptions considered in conjunction with the accompanying drawings. It is to be understood, however, that the drawings are designed solely for the purposes of illustration and not as a definition of the limits of the invention.

During a lightning strike, the electric current tends to run along the outer surface of a conductor owing to the skin effect. Therefore, in a preferred embodiment of the invention, a portion of the down-conductor is realised to act as a Faraday cage. This can be achieved by a conductive loop or band arranged about an inner surface or an outer surface of the blade, or between the inner and outer surfaces of the blade. For example, a conductive band arranged about a root-end region of the blade could act as a complete or partial Faraday cage. This could be achieved by a suitable metal mesh arrangement in the base and/or root region. This metal mesh portion is preferably electrically connected to a low self-inductance portion, for example comprising a multi-strand down-conductor portion as described above. Finally, at the blade end region, a conventional down-conductor portion may be connected to a tip receptor. An advantage of such a Faraday cage construction at the blade end region is that adequate lightning protection is provided for any electrical or electronic components such as sensors etc. arranged in the lower blade region.

Fig. 1 shows a first embodiment of a wind turbine rotor blade with a down-conductor according to the invention;

Fig. 2 shows a second embodiment of a wind turbine rotor blade with a down-conductor according to the invention;

Fig. 3 shows a prior art wind turbine rotor blade with a conventional down-conductor;

Fig. 4 shows a cross-section of a first embodiment of a down-conductor according to the invention;

Fig. 5 shows a cross-section of a second embodiment of a down-conductor according to the invention;

Fig. 6 shows a cross-section of a prior art wind turbine rotor blade with a conventional down-conductor;

Fig. 7 shows a further embodiment of a wind turbine rotor blade with a down-conductor according to the invention.

In the diagrams, like numbers refer to like objects throughout. Objects in the diagrams are not necessarily drawn to scale.

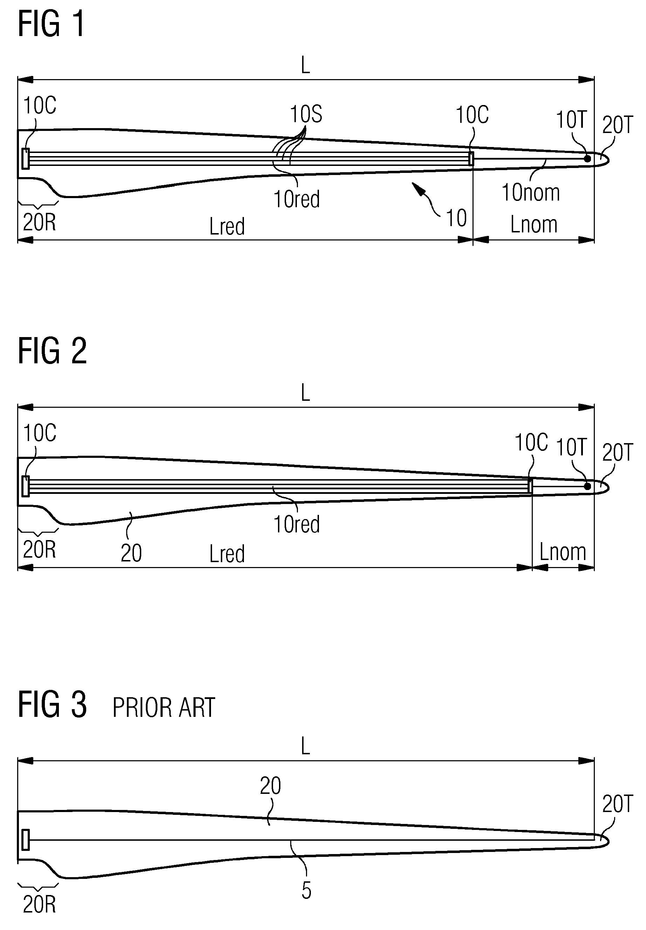

Fig. 1 shows a first embodiment of a wind turbine rotor blade 20 with a down-conductor 10 according to the invention. Here, the down-conductor 10 comprises a multi-string portion $10_{red}$ extending from the blade root 20R over a fraction $L_{red}$ of the total down-conductor length L, and a single-string portion $10_{nom}$ over the remaining fraction $L_{nom}$ of the total down-conductor length L, i.e. extending into the blade tip region 20T. A number of receptors can be arranged at the blade exterior and connected at intervals along the down-conductor 10. The diagram shows a tip receptor 10T at an outermost region of the blade 20. The geometry of the down-conductor in the multi-string portion $10_{red}$ is chosen to achieve a self-inductance that is at most one fourth of the self-inductance of a functionally equivalent single-string conductor. The self-inductance of the multi-string portion $10_{red}$ can therefore be assumed to be at most 25% of the self-inductance of the single-string portion $10_{nom}$. From the point of view of a lightning strike, the "electrical length" of the blade 20 from tip receptor to root therefore appears shorter. In an exemplary embodiment, the length of the multi-string fraction $L_{red}$ is 80% of the total length L, and the length of the single-string fraction $L_{nom}$ is 20% of the total length L. For a total length L of 75 m, a typical down-conductor self-inductance of 1.0 $\mu$H/m over the single-string portion $10_{nom}$, a reduced self-inductance of 0.25 $\mu$H/m over the multi-string portion $10_{red}$, it can be estimated that the voltage potential established between the outer tip and the root end of the down-conductor 5 is at most only 7 megavolts.

Fig. 2 shows a second embodiment of a wind turbine rotor blade 20 with a down-conductor 10 according to the invention. Here, the length of the multi-string fraction $L_{red}$ is 90% of the total length L, and the length of the single-string fraction $L_{nom}$ is 10% of the total length L. Again, using a total length L of 75 m, a typical down-conductor self-inductance of 1.0 $\mu$H/m over the single-string portion $10_{nom}$, a reduced self-inductance of 0.25 $\mu$H/m over the multi-string portion $10_{red}$, it can be estimated that the voltage potential established between the outer tip and the root end of the down-conductor 5 is at most only 5 megavolts.

Fig. 3 shows a prior art wind turbine rotor blade with a conventional down-conductor 5. Here also, the total length L of the down-conductor 10 is 75 m. With a typical down-conductor self-inductance of 1.0 $\mu$H/m, and using equation 1, it can be estimated that the voltage potential established between the outer tip and the root end of the down-conductor 5 can reach 15 megavolts. This compares very unfavourably with the much lower values seen for the inventive down-conductor as described in Figs. 1 and 2 above.

During pre-strike conditions, the height above ground to a blade tip region determines the static voltage "seen" by the blade material. An elevated static field can develop as storm conditions evolve, during favourable weather conditions, etc.

During a return stroke and during a subsequent stroke, the large dI/dt will result in a very high voltage gradient owing to the self-inductance of the blade down-conductor. The high voltage gradient stresses the blade material to a great extent. Furthermore, the high voltage gradient makes it more likely that a leader will develop and exit the blade, thereby increasing the likelihood of attracting a stroke. Another unwanted side-effect is the generation of a plasma layer over the outer surface of the blade, since the ionized air can help a lightning strike to enter the blade at a region other than a receptor. The ensuing discharge can cause severe damage to the blade as it seeks the shortest path to the blade's down-conductor. These undesirable effects are essentially eliminated by the inventive down-conductor described in Figs. 1 and 2 above.

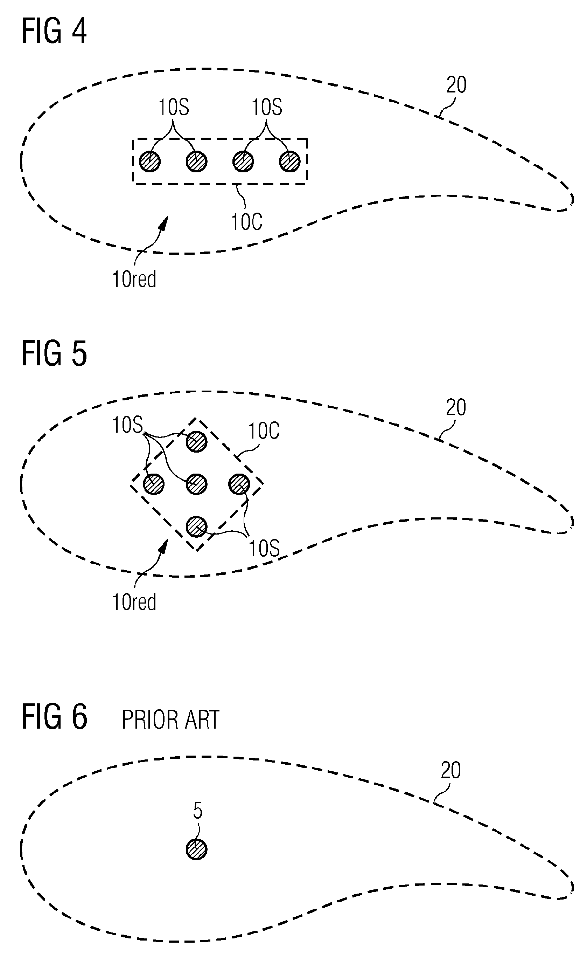

Fig. 4 shows a cross-section of a first embodiment of a down-conductor 10 according to the invention, for example as described in Fig. 1 or Fig. 2 above. The cross-section is taken at some point through the reduced self-inductance portion $10_{red}$. Here, the down-conductor comprises four strings 10S arranged side by side in the interior of the blade 20. The diagram also indicates a connector 10C which can electrically connect the strings 10S in the blade root region 20R and at the interface to the single-string conductor $10_{nom}$ in the blade tip region.

Fig. 4 shows a cross-section of a second embodiment of a down-conductor 10 according to the invention, for example as described in Fig. 1 or Fig. 2 above. The cross-section is taken at some point through the reduced self-inductance portion $10_{red}$. Here, the down-conductor comprises five strings 10S arranged in a bundle running through the interior of the blade 20. The diagram also indicates a connector 10C which can electrically connect the strings 10S in the blade root region 20R and at the interface to the single-string conductor $10_{nom}$ in the blade tip region.

Fig. 6 shows a cross-section of a prior art wind turbine rotor blade 20 with a conventional down-conductor 5. The diagram shows the conductor realised as a single string or cable, with a certain cross-section that is a characterizing parameter for the self-inductance of that down-conductor 5. The cross-sectional area and the surface area of the conventional down-conductor 5 are significantly less than the total cross-sectional area and the total surface area of the inventive down-conductor 10 (as indicated in Figs. 4 and 5 above), which has a significantly lower self-inductance as a result.

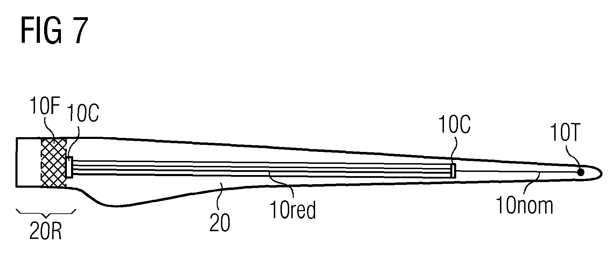

Fig. 7 shows a wind turbine rotor blade 20 with a further embodiment of a down-conductor 10 according to the invention. Here, the lightning protection system 1 also includes a Faraday cage construction 10F arranged about the root region 20R of the blade 20. The complete or partial Faraday cage 10F can be achieved by arranging a layer of metal mesh at some level (inner, intermediate, outer) level of the blade 20, and electrically connecting it to the down-conductor 10. Any electrical or electronic components that need to be arranged in the blade root cavity - within the Faraday cage 10F - are therefore given added protection or screening, since charge will tend to be distributed on the outside of the Faraday cage 10F.

Although the present invention has been disclosed in the form of preferred embodiments and variations thereon, it will be understood that numerous additional modifications and variations could be made thereto without departing from the scope of the invention. For example, although the inventive down-conductor is particularly advantageous for a long wind turbine rotor blade with a length of 60 m or more, it can of course be used to optimize an LPS of a wind turbine with shorter blades.

For the sake of clarity, it is to be understood that the use of "a" or "an" throughout this application does not exclude a plurality, and "comprising" does not exclude other steps or elements.

## Claims

1. A rotor blade down-conductor (10) of a wind turbine lightning protection system (1), realized to extend from a blade root (20R) to a blade tip (20T), and wherein a portion ($10_{red}$) of the down-conductor (10), over at least a fraction ($L_{red}$) of the total down-conductor length (L), comprises a reduced self-inductance compared to the self-inductance of a functionally equivalent single-string down-conductor (5).

2. A down-conductor according to claim 1, wherein a reduced self-inductance portion ($10_{red}$) of the down-conductor (10) comprises an increased surface area relative to the functionally equivalent single-string conductor (5).

3. A down-conductor according to clam 1 or claim 2, wherein the reduced self-inductance portion ($10_{red}$) of the blade down-conductor (10) is realized as a multi-string conductor ($10_{red}$).

4. A down-conductor according to claim 3, wherein the multi-string conductor ($10_{red}$) comprises at least two conductor strings (10S).

5. A down-conductor according to claim 3 or claim 4, wherein the conductor strings (10S) of the reduced self-inductance portion ($10_{red}$) are essentially geometrically equivalent.

6. A down-conductor according to any of the preceding claims, wherein the reduced self-inductance portion ($10_{red}$) of the down-conductor (10) extends over a fraction ($L_{red}$) comprising at least 60%, more preferably at least 80%, most preferably at least 90% of the total conductor length (L).

7. A down-conductor according to any of the preceding claims, with a self-inductance of at most 1.0 $\mu$H per meter, more preferably at most 0.25 $\mu$H per meter in its reduced self-inductance portion ($10_{red}$).

8. A down-conductor according to any of the preceding claims, comprising a single-string portion ($10_{nom}$) arranged in the blade tip region (20T).

9. A method of manufacturing a rotor blade down-conductor (10) of a wind turbine lightning protection system (1), which method comprises the steps of

   - determining a fraction ($L_{red}$) of the total conductor length (L) over which a self-inductance of the down-conductor (10) is to be reduced;
   - choosing a physical property of a comparable single-string conductor (5); and
   - modifying that physical property over a portion ($10_{red}$) of the down-conductor (10) to reduce the self-inductance of the down-conductor (10) over that conductor length fraction ($L_{red}$).

10. A method according to claim 9, wherein the step of modifying a physical property comprises increasing the surface area of the blade down-conductor (10) in that reduced inductance portion ($10_{red}$).

11. A method according to claim 9 or claim 10, wherein the step of modifying a physical property comprises assembling the down-conductor portion ($10_{red}$) from a plurality of conductor strings (10S).

12. A wind turbine (2) comprising at least one rotor blade (20), and further comprising a wind turbine lightning protection system (1) with at least one rotor blade down-conductor (10) according to any of claims 1 to 8 arranged in a rotor blade (20).

13. A wind turbine according to claim 12, wherein a down-conductor (10) comprises a reduced self-inductance portion ($10_{red}$) over at least 60%, more preferably at least 80%, most preferably at least 90% of the total conductor length (L).

14. A wind turbine according to claim 13, wherein the remaining fraction ($L_{nom}$) of a down-conductor (10) comprises a single-string conductor portion ($10_{nom}$) with nominal self-inductance.

15. A wind turbine according to any of claims 12 to 14, wherein the wind turbine lightning protection system (1) comprises a complete or partial Faraday cage (F) arranged in a lower region (R) of a rotor blade (20) and electrically connected to a down-conductor (10) of that rotor blade (20).

## FIG 1

L

10C
10S
10C
10T
20T

10red

20R
Lred
10
10nom
Lnom

## FIG 2

L

10C
10C
10T
20T

10red

20R
20
Lred
Lnom

## FIG 3   PRIOR ART

L

20

20T

20R
5

## FIG 4

## FIG 5

## FIG 6    PRIOR ART

# FIG 7

Europäisches
Patentamt

European
Patent Office

Office européen
des brevets

# EUROPEAN SEARCH REPORT

Application Number

EP 16 17 3668

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/329865 A1 (HIBBARD PAUL [GB]) 30 December 2010 (2010-12-30) * abstract * * paragraph [0020] * * paragraph [0023] - paragraph [0024] * * paragraph [0052] * * paragraph [0056] - paragraph [0058] * * paragraph [0097] - paragraph [0098]; figures 1,2,3,7,8,9 * | 1-15 | INV. F03D80/30 |
| X | WO 2008/101506 A2 (VESTAS WIND SYS AS [DK]; BERTHELSEN KIM [DK]) 28 August 2008 (2008-08-28) * abstract * * page 2, line 29 - page 3, line 1 * * page 12, line 13 - page 13, line 2 * * page 14, line 9 - page 15, line 3; figures 1,3 * | 1-15 | |
| X | EP 2 110 552 A1 (SIEMENS AG [DE]) 21 October 2009 (2009-10-21) * abstract * * paragraph [0014] * * paragraph [0023] * * paragraph [0033] - paragraph [0035]; figures 3,4 * | 1-15 | TECHNICAL FIELDS SEARCHED (IPC) F03D |
| X | EP 2 365 218 A1 (LM GLASFIBER AS [DK]) 14 September 2011 (2011-09-14) * abstract * * paragraph [0013] * * paragraph [0030] - paragraph [0031] * * paragraph [0036] - paragraph [0037]; figures 1,3 * | 1-15 | |

-/--

The present search report has been drawn up for all claims

| Place of search | Date of completion of the search | Examiner |
|---|---|---|
| The Hague | 6 December 2016 | Westermayer, Philipp |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 16 17 3668

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/182731 A1 (NAKA TAKEHIRO [JP] ET AL) 28 July 2011 (2011-07-28) <br> * paragraph [0014] * <br> * paragraph [0026] - paragraph [0027] * <br> * paragraph [0036] * <br> * paragraph [0092] * <br> * paragraph [0110] - paragraph [0114]; figures 4,5 * <br> ----- | 1-6,8-13 | |

TECHNICAL FIELDS
SEARCHED      (IPC)

The present search report has been drawn up for all claims

| Place of search | Date of completion of the search | Examiner |
|---|---|---|
| The Hague | 6 December 2016 | Westermayer, Philipp |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

     .....................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 17 3668

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2016

| Patent document cited in search report | | Publication date | Patent family member(s) | | Publication date |
|---|---|---|---|---|---|
| US 2010329865 | A1 | 30-12-2010 | AU | 2010202651 A1 | 20-01-2011 |
| | | | CN | 101949366 A | 19-01-2011 |
| | | | DK | 2282057 T3 | 22-02-2016 |
| | | | EP | 2282057 A1 | 09-02-2011 |
| | | | US | 2010329865 A1 | 30-12-2010 |
| WO 2008101506 | A2 | 28-08-2008 | CN | 101668945 A | 10-03-2010 |
| | | | EP | 2122162 A2 | 25-11-2009 |
| | | | US | 2010090472 A1 | 15-04-2010 |
| | | | WO | 2008101506 A2 | 28-08-2008 |
| EP 2110552 | A1 | 21-10-2009 | CN | 101559652 A | 21-10-2009 |
| | | | DK | 2110552 T3 | 01-02-2016 |
| | | | EP | 2110552 A1 | 21-10-2009 |
| | | | ES | 2557998 T3 | 01-02-2016 |
| | | | US | 2009257881 A1 | 15-10-2009 |
| | | | US | 2012194960 A1 | 02-08-2012 |
| EP 2365218 | A1 | 14-09-2011 | CN | 102869882 A | 09-01-2013 |
| | | | DK | 2545277 T3 | 18-08-2014 |
| | | | EP | 2365218 A1 | 14-09-2011 |
| | | | EP | 2545277 A2 | 16-01-2013 |
| | | | US | 2012321468 A1 | 20-12-2012 |
| | | | WO | 2011110492 A2 | 15-09-2011 |
| US 2011182731 | A1 | 28-07-2011 | AU | 2010336835 A1 | 12-01-2012 |
| | | | CN | 102472254 A | 23-05-2012 |
| | | | EP | 2518312 A1 | 31-10-2012 |
| | | | JP | 5308538 B2 | 09-10-2013 |
| | | | KR | 20120037917 A | 20-04-2012 |
| | | | US | 2011182731 A1 | 28-07-2011 |
| | | | WO | 2011077970 A1 | 30-06-2011 |

EPO FORM P0459

For more details about this annex : see Official Journal of the European Patent Office, No. 12/82